# EUROPÄISCHE PATENTANMELDUNG

(11) **EP 1 772 080 A2**
(43) Veröffentlichungstag der Anmeldung: **11.04.2007**
(21) Anmeldenummer: 06019218.4
(22) Anmeldetag: 14.09.2006
(51) Int. Cl.: A47J 27/14

(54) **Verfahren und Vorrichtung zum Garen mit Dampf**

(30) Priorität: 26.09.2005 DE 102005046011; 24.11.2005 DE 102005056371
(71) Anmelder: Miele & Cie. KG, 33332 Gütersloh (DE)
(72) Erfinder: Adamczak, Jürgen, 33818 Leopoldshöhe (DE); Berger, Uwe, 32278 Kirchlengern (DE); Dittrich, Hartmut, Dr., 32257 Bünde (DE); Homburg, Stefan, 32257 Bünde (DE); Metz, Thomas, 32257 Bünde (DE); Telthoerster, Dirk, 32257 Bünde (DE)

(57) **Zusammenfassung**

Die Erfindung betrifft ein Verfahren und eine Vorrichtung zum Erwärmen und Garen von Speisen und Nahrungsmitteln, mit einem geschlossenen Behälter für das Gargut, der ein Boden- und ein Deckelteil aufweist, mit einer Vorrichtung zum Erzeugen von Dampf, mit einer Zuleitungsvorrichtung, mittels der der Dampf in den Gargutbehälter leitbar ist, und mit einer Trag- bzw. Befestigungsvorrichtung für ein oder mehrere Gargutbehälter.

Um eine Vorrichtung zum Garen mit Dampf derart auszubilden, dass man ein Gerät mit einem einfachen Aufbau erhält, welches eine kompakte und raumsparende Bauweise erlaubt, und mit dem hochqualitative Garergebnisse erzielt werden können, ist der Gargutbehälter (2) an eine Zuleitung (15) zum Einleiten des Dampfes und an einen Temperaturfühler (20) anschließbar ausgebildet, wobei der Temperaturfühler (20) mit einer Steuerungseinrichtung (9) in Verbindung steht, mittels der die Steuerung der Dampfzuleitung in den Gargutbehälter (2) zur Durchführung des Gar- bzw. Erwärmungsprozesses durchgeführt wird.

## Beschreibung

Die Erfindung bezieht sich auf ein Verfahren zum Garen mit Dampf sowie eine Vorrichtung gemäß Oberbegriff des Anspruchs 5.

Das Garen mit Dampf erfreut sich zunehmender Beliebtheit. Aus der Anwendungspraxis und aus der Literatur sind inzwischen eine ganze Reihe von unterschiedlichen Systemen bekannt, mit denen Speisen und Nahrungsmittel unter Einsatz von Dampf erhitzt und gegart werden können.

In der EP 1 108 384 B1 (Miele) ist ein Haushaltgerät zum drucklosen Dampfgaren beschrieben, welches nach Art der seit jeher bekannten herkömmlichen Haushaltsherde aufgebaut ist, die mit Konvektions- bzw. Infrarotheizungen betrieben werden. Das vorgenannte Dampfgargerät besitzt ein Gehäuse mit einer darin angeordneten Backmuffel. In entsprechende Führungsschienen der Backmuffel sind Garbehälter für die Aufnahme des Gargutes in mehreren Etagen einschiebbar. Die hier zur Anwendung kommenden Garbehälter sind als offene Schale ausgebildet.
Das Gerät weist ferner einen Wasserbehälter für die Bevorratung mit Wasser und einen Dampferzeuger auf, in dem das Wasser zu Wasserdampf erhitzt wir. Der Dampf wird dann in die Backmuffel eingeleitet und kommt dort direkt mit dem Gargut in Kontakt. Über eine entsprechende Steuereinrichtung und einen im Garraum angeordneten Temperaturfühler wird die Zufuhr des Dampfes geregelt bzw. wird der Dampfgarprozess gesteuert.

Dampfgargeräte der vorbeschriebenen Art liefern zwar ausgezeichnete Ergebnisse bezüglich der Qualität der darin behandelten Speisen, jedoch besitzen sie den Nachteil, dass sie ein aufwendiges Gehäusekonzept erfordern und damit sehr teuer sind.
Weiterhin muss für ein derartiges Gerät ein entsprechendes Raumangebot in der Küche vorhanden sein.

Aus der DE 41 16 425 A1 (Esser) ist ein Dampfgargerät bekannt, bei dem das Erhitzen des Gargutes sowohl über konventionelle Heizsysteme, wie Ober- und Unterhitze, sowie auch durch die Zuleitung von Dampf möglich ist. Bei diesem Gerät geht es in erster Linie darum, über einen regelbaren Dampfüberhitzer den in einem Dampfgenerator erzeugten Dampf vor der Einleitung in den Garraum bzw. in ein geschlossenes Gargefäß auf eine Temperatur oberhalb von 100 °C zu bringen. Dadurch soll das Garen im Hochtemperaturbereich möglich sein, um zum Beispiel einen Bräunungseffekt an dem Gargut zu erzielen.

In dieser Vorveröffentlichung wird die Verwendung eines geschlossenen Gargefäßes beschrieben, welches aus einer Gargutschale und einem Deckel besteht. Für den Dampfgarbetrieb wird das Gargefäß auf eine Tragvorrichtung in der Backmuffel des Herdes gesetzt und muss an eine flexible Dampfleitung angeschlossen werden, so dass darüber der Dampf in das Gargefäß eingeleitet werden kann. Die flexible Anschlussleitung wird dabei über eine Dampfanschlusskupplung in der Tür des Gerätes und weiteren im Gehäuse geführten Leitungen mit der Dampferzeugungseinrichtung verbunden.

Auch aus der US-PS 4,655,192 (Jovanovic) ist ein Dampfgargerät bekannt, bei dem zweiteilige geschlossene Garbehälter Verwendung finden. Mehrere Gargefäße können übereinander angeordnet werden. Jedes Gargefäß wird jeweils von einem separaten Dampferzeuger mit Dampf versorgt, wobei der Dampf über eine Düse in das Innere des Garbehälters eingeleitet wird.

Die Ausgestaltungen nach der DE 41 16 425 A1 und der US-PS 4,655,192 erlauben es zwar, dass man mehrere Garbehälter im Garraum dieser Geräte unterbringen kann und diese auch über eine Dampfzuleitung selbständig mit Dampf zu versorgen. Jedoch besitzen sie den Nachteil, dass keinerlei Vorkehrungen getroffen sind, um überschüssigen und zu kaltem Dampf evtl. nach Außen abführen zu können.

Bei diesen Ausführungsformen würde der überschüssige Dampf nur dadurch entweichen können, dass sich bei entsprechendem Druckaufbau der Deckel des Gargefäßes anhebt, sodass ähnlich wie beim Kochen mit einem normalen Kochtopf auf einer Herdplatte die überschüssige Luft aus dem Garbehälter entweichen kann. Nachteilig hierbei ist, dass es dabei durch das sich wiederholende Abheben des Deckels zu den bekannten Flatter- bzw. Klappergeräuschen kommt und dass dabei auch Kochgut aus dem Behälter austreten kann. Weiterhin ist ein zielgerichtet gesteuertes und geregeltes Dampfgarverfahren mit Geräten in dieser Aufbauform nicht möglich, weil es keine Temperaturregelung gibt.

Ferner besitzen diese Geräte insgesamt einen aufwendigen Aufbau, da sie zusätzlich noch mit konventioneller Heizungsunterstützung arbeiten und immer ein Innenraumgehäuse benötigen, in dem die Gargutbehälter untergebracht werden müssen.

Demgegenüber sind in jüngster Zeit auch Dampfgargeräte in einer sehr einfachen Form auf den Markt gekommen. Die Geräte besitzen lediglich ein Sockelteil in dem der Dampferzeuger und dessen Steuereinrichtung untergebracht ist. Die Garbehälter für das Gargut können dabei übereinandergestellt werden. Im Boden- und im Deckelteil besitzen sie Öffnungen für das Durchleiten des Dampfes. Der im Sockelbereich des Gerätes erzeugte Dampf wird von unten nach oben durch die Garbehälter geleitet, wobei im oberen Deckelbereich der überschüssige Dampf austreten kann.
Diese Geräte weisen zwar eine ganz einfache Aufbauform auf und sind auch preiswert in der Herstellung, jedoch lassen sich mit diesen Geräten keine geregelten und qualitativ guten Garergebnisse erzielen. Allein dadurch, dass der Dampf von dem unteren Garbehälter bis hin zum oberen Garbehälter einen langen Weg über die darin angeordneten Speisen zurücklegen muss, ist in den oberen Etagen kaum noch ein ordentliches Garen möglich. In der Regel müssen hier dann die Garbehälter noch einmal umgestellt werden, um die Speisen aus den oberen Etagen nachzugaren.

Der vorliegenden Erfindung liegt das Problem zu Grunde, ein Verfahren zum Garen mit Dampf derart auszubilden, bei dem hochqualitative Garergebnisse erzielt werden können.

Erfindungsgemäß wird dieses Problem durch ein Verfahren zum Garen und Erhitzen von Speisen und Nahrungsmitteln mit den Merkmalen des Patentanspruchs 1 gelöst. Vorteilhafte Ausgestaltungen und Weiterbildungen der Erfindung ergeben sich aus den nachfolgenden Unteransprüchen.

Durch das erfindungsgemäße Verfahren wird insbesondere der Vorteil erzielt, dass hochqualitative Garergebnisse erzielt werden können.

Der einströmende Dampf wird nicht direkt auf die Lebensmittel geleitet, da dies zu unerwünschten Garergebnissen führen würde. Insgesamt wird durch die Anordnung der Zuleitungen der Dampf gleichmäßig im Gargutbehälter verteilt, so dass auch ein gleichmäßiger Garprozess an allen Teilen des eingefüllten Gargutes stattfinden kann. Durch die hohe Geschwindigkeit des einströmenden Dampfes ist ferner eine gute Vermischung des Frischdampfes mit der in dem Gargutbehälter befindlichen Luft erreicht, bevor der Dampf bzw. das Dampf-Luft-Gemisch auf die Gargutoberfläche trifft.

Der Dampf wird dabei gezielt in den Gargutbehälter eingeleitet. Durch das Einführen eines Temperaturfühlers in den Gargutbehälter ist der Garprozess regelbar und kann auf die individuellen Speisen abgestimmt werden. Damit erhält man optimale und hochqualitative Garergebnisse, bei wenig Energieverbrauch und geringem Dampfüberschuss. Ein zu hoher Dampfüberschuss kann nachteilig für die Kücheneinrichtung und die Küche sein. Beispielsweise ist die Bildung von Stockflecken denkbar.

Eine vorteilhafte Weiterbildung der erfindungsgemäßen Lehre sieht vor, dass dem Dampf bei dem Einströmen in den Gargutbehälter mittels eines Strömungsleitelements eine Richtung vorgegeben wird, so dass dessen Strömungswegstrecke von dem Einlass zu einem Auslass des Gargutbehälters maximal wird. Hierdurch wird vermieden, dass ein Kurzschluss zwischen Dampfeinlass und Dampfauslass einstehen kann, was einen schlechten Wirkungsgrad zur Folge hätte.

Eine vorteilhafte Weiterbildung der vorgenannten Ausführungsform sieht vor, dass der Dampf bei dem Einströmen in den Gargutbehälter mittels des Strömungsleitelements weg von einem zumindest teilweise in dem Gargutbehälter angeordneten Temperaturfühler geleitet wird. Auf diese Weise wird erreicht, dass tatsächliche Zustände im Gargutbehälter gemessen werden können, ohne dass der Temperaturfühler durch einströmenden Dampf aus dem Dampfeinlass negativ beeinflusst werden kann.

Eine andere vorteilhafte Weiterbildung des erfindungsgemäßen Verfahrens sieht vor, dass die Dampferzeugung mittels der Gerätesteuerung derart gesteuert oder geregelt wird, dass der Druck im Inneren des Gargutbehälters während des Garprozesses etwa 0,3 kPa nicht übersteigt. Hierdurch ist es beispielsweise ermöglicht, dass herkömmliche Gargutbehälter mit einem Bodenteil und einem Deckelteil verwendet werden können, ohne dass das Deckelteil beim Garen kurzzeitig vom Bodenteil abhebt, was bei höheren Innendrücken der Fall sein könnte. Dies wäre im Rahmen der Erfindung zwar grundsätzlich auch möglich. In der Regel wird aber ein kontrollierter Auslass von Luft und Dampf über eine definierte Auslassöffnung bevorzugt.

Der vorliegenden Erfindung liegt ferner das Problem zu Grunde, eine Vorrichtung zum Garen mit Dampf derart auszubilden, dass man ein Gerät mit einem einfachen Aufbau erhält, welches eine kompakte und raumsparende Bauweise erlaubt, und mit dem hochqualitative Garergebnisse erzielt werden können. Ferner soll das Gargerät auch eine einfache Bedienung erlauben.

Erfindungsgemäß wird dieses Problem durch eine Vorrichtung zum Garen und Erhitzen von Speisen und Nahrungsmitteln mit den Merkmalen des Patentanspruchs 5 gelöst. Vorteilhafte Ausgestaltungen und Weiterbildungen der Erfindung ergeben sich aus den nachfolgenden Unteransprüchen.

Durch die erfindungsgemäße Aufbaukonzeption werden zahlreiche Vorteile erzielt. Die Garvorrichtung erfüllt alle wesentlichen Funktionen, um Lebensmittel in einem geschlossenen Gargutbehälter mittels Dampf optimal garen zu können.

Der Dampf wird dabei gezielt in den Gargutbehälter eingeleitet. Durch das Einführen eines Temperaturfühlers in den Gargutbehälter ist der Garprozess regelbar und kann auf die individuellen Speisen abgestimmt werden. Damit erhält man optimale und hochqualitative Garergebnisse, bei wenig Energieverbrauch und geringem Dampfüberschuss. Ein zu hoher Dampfüberschuss kann nachteilig für die Kücheneinrichtung und die Küche sein.
Beispielsweise ist die Bildung von Stockflecken denkbar.

In einer Weiterbildung der Erfindung können Luft und zu kalter Dampf ebenfalls gezielt aus dem Garbehälter herausgeleitet werden.

Ein besonderes Schüsselelement stellt die erfindungsgemäße Kupplungsvorrichtung dar. Dadurch wird es möglich, alle funktional wesentlichen Bauelemente in den Gargutbehälter einzukuppeln. Dies geschieht in einfacher Weise beim Einschieben des Gargutbehälters in die Garvorrichtung. Der Gargutbehälter kann somit nach dem Befüllen mit den zu garenden Speisen direkt und ohne weitere Handgriffe an unterschiedliche Dampfgarsysteme angeschlossen werden, ohne dass der Gargutbehälter noch mit separaten Luftzuführungsleitungen verbunden werden muss und ohne dass noch ein separater Temperaturfühler in den Gargutbehälter eingeführt werden muss.

Durch die erfindungsgemäße Anordnung der luft- bzw. dampfführenden Zu- und Ableitungen im Gargutbehälter wird vermieden, dass ein Kurzschluss zwischen Dampfeinlass und Dampfauslass einstehen kann, was einen schlechten Wirkungsgrad zur Folge hätte.

Durch die erfindungsgemäße Anordnung des Temperaturfühlers wird erreicht, dass tatsächliche Zustände im Gargutbehälter gemessen werden können, ohne dass der Temperaturfühler durch einströmenden Dampf aus dem Dampfeinlass oder durch die bei ausgeschaltetem Dampferzeuger über den Dampfauslass einströmende Luft negativ beeinflusst werden kann.

Außerdem wird der einströmende Dampf nicht direkt auf die Lebensmittel geleitet, da dies zu unerwünschten Garergebnissen führen würde. Insgesamt wird durch die Anordnung der Zuleitungen der Dampf gleichmäßig im Gargutbehälter verteilt, so dass auch ein gleichmäßiger Garprozess an allen Teilen des eingefüllten Gargutes stattfinden kann.

Durch die erfindungsgemäße Kupplungsvorrichtung in Verbindung mit dem geschlossenen Gargutbehälter sind auch einfache Kombinationsmöglichkeiten denkbar. So kann z.B. die Dampfgarvorrichtung in einem Gerät mit Mikrowellenbeheizung kombiniert betrieben werden, da die Kupplungsvorrichtung mit den funktionell wesentlichen Elementen für das Dampfgaren in einfacher Weise mikrowellendicht ausgebildet werden kann.

Ferner ist es denkbar, mit Convenience Food gefüllte Fertigverpackungen als Gargutbehälter einzusetzen, die beispielsweise an eine Kupplungsvorrichtung einer Andockstation angekuppelt werden können. Die Andockstation kann dabei beispielsweise als ein wandmontiertes Gerät ausgebildet sein. In jedem Fall weist die Andockstation bis auf die Gargutbehälter alle anderen Bauteile der Vorrichtung auf.

Durch den erfindungsgemäßen Aufbau der Garvorrichtung wird insgesamt ein sehr einfach handhabbares Gerät geschaffen, welches eine raumsparende Aufbauform aufweist, das relativ preiswert herstellbar ist und trotzdem optimale und hochqualitative Garergebnisse möglich macht.

Die Erfindung wird anhand eines Ausführungsbeispiels nachstehend näher erläutert.

Ein Ausführungsbeispiel der Erfindung ist in den Zeichnungen rein schematisch dargestellt und wird nachfolgend naher beschrieben. Es zeigen:
- Figur 1: eine Vorrichtung zum Garen mit Dampf in Vorderansicht;
- Figur 2: das Dampfgargerät gem. Fig. 1 in Seitenansicht;
- Figur 3: die erfindungsgemäße Kupplungsvorrichtung in perspektivischer Ansicht
- Figur 4: die erfindungsgemäße Kupplungsvorrichtung in perspektivischer Darstellung von oben gesehen
- Figur 5: die erfindungsgemäße Kupplungsvorrichtung in perspektivischer Ansicht, von unten gesehen
- Figur 6: eine Darstellung im Schnitt, bei der die Kupplungsvorrichtung und deren Anschluss an den Gargutbehälter ausschnittsweise dargestellt sind;
- Figuren 7 bis 10: perspektivische Darstellungen einer weiteren Variante der Dampfgarvorrichtung in einer anderen Aufbauform.

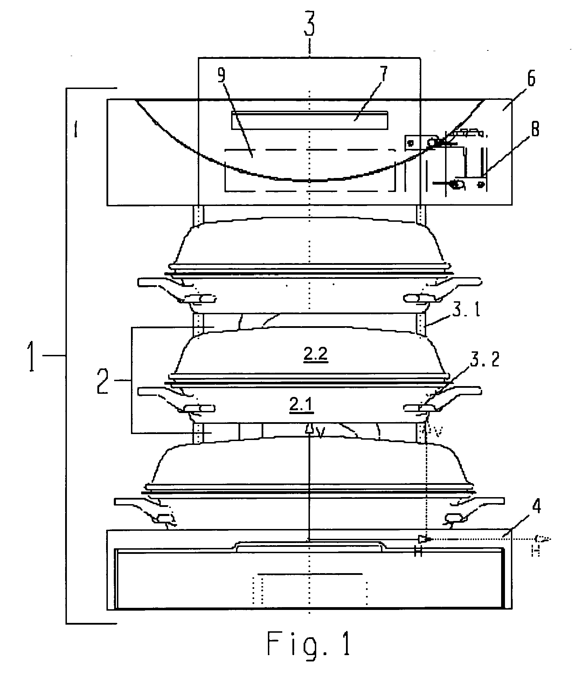

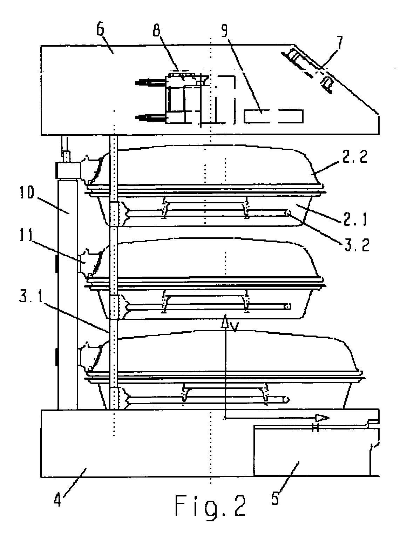

Die als Dampfgargerät 1 ausgebildete Vorrichtung gemäß Figur 1 und Figur 2 besitzt Gargutbehälter 2, die ein Bodenteil 2.1 und ein Deckelteil 2.2 aufweisen und somit einen geschlossenen Gargutbehälter 2 bilden.

Die Gargutbehälter 2 können terrassenförmig übereinander angeordnet werden. Dabei werden sie von einer Tragvorrichtung 3 aufgenommen und gehalten. Die Tragvorrichtung 3 besteht dabei aus den senkrechten Stützen 3.1 und den Tragarmen 3.2.

Im unteren Bereich des Gerätes 1 ist ein Sockelteil 4 gebildet, in dem ein Wasserbehälter 5 für den Wasservorrat vorgesehen ist. Der Wasserbehälter 5 ist schubladenförmig im Sockelteil 4 gelagert.

Im oberen Bereich des Gerätes 1 ist ein Kopfteil 6 gebildet. In diesem Kopfteil 6 sind eine Anzeige- und Bedieneinrichtung 7, ein Dampferzeugungsvorrichtung 8 und die elektrische Steuerungseinrichtung 9 angeordnet.

Wie aus der Figur 2 ersichtlich, besitzt das Gerät 1 im hinteren Bereich eine zentrale Andockstation 10, in der stationäre Kupplungsvorrichtungen 11 angeordnet sind. Die Andockstation 10 kann die Funktion erfüllen, dass an ihr die Gargutbehälter 2 befestigt werden können und dass im Inneren nachstehend noch näher beschriebene Dampf- bzw. Luftführungsleitungen, Wasserleitungen und elektrische Leitungen untergebracht werden können.

Die Gargutbehälter 2 weisen in ihrem rückseitigen Bereich eine Öffnung auf. Die Öffnung ist dabei im Deckelteil 2.2 angeordnet. Beim Beschicken des Gerätes 1 für den Garbetrieb werden die Gargutbehälter 2 mit ihren Öffnungen an die Kupplungsvorrichtungen 11 angeschlossen bzw. aufgesteckt. In der Kupplungsvorrichtung 11 sind Zu- und Ableitungen 15,16 für den Dampf sowie ein Temperaturfühler 20 integriert angeordnet. Getragen und gehalten werden die Gargutbehälter 2 bei der Ausführung gemäß der Figuren 1 und 2 von den Tragarmen 3.2, die den Gargutbehälter 2 seitlich unterfassen.

### Die Funktionsweise bei dieser Ausgestaltung ist wie folgt:

Das im Wasserbehälter 5 bevorratete Wasser wird über eine nicht näher dargestellte Pumpe nach oben in die Dampferzeugungsvorrichtung 8 hochgepumpt. Der in der Dampferzeugungsvorrichtung 8 produzierte Dampf wird über in der Andockstation 10 angeordnete Dampfleitungen und über die Kupplungsvorrichtung 11 in das Innere der Gargutbehälter 2 geleitet. Die Zufuhr von Dampf wird über die Bedieneinrichtung 7 aktiviert. Die Steuerungseinrichtung 9 steuert und regelt in Verbindung mit dem Temperaturfühler 20 den Garprozess.

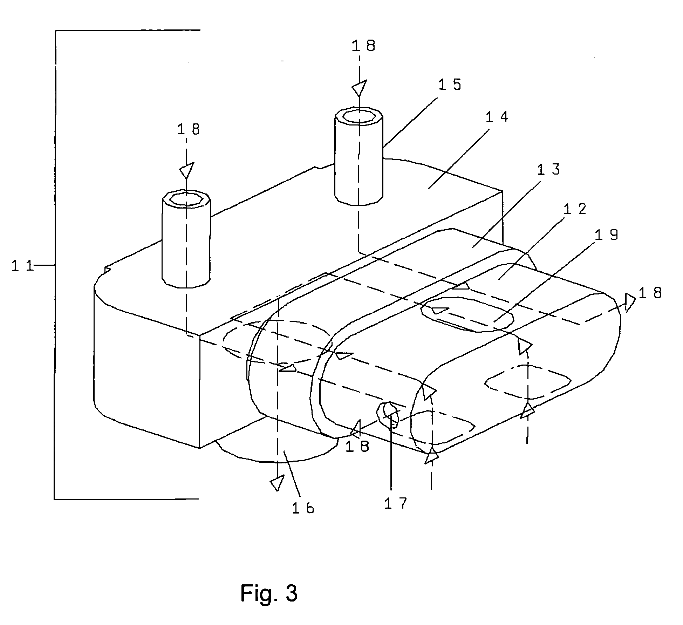

Eine wichtige Funktion bei diesem Gerät 1 besitzt hierbei die Kupplungsvorrichtung 11. Diese wird nachstehend unter Bezugnahme auf die Figuren 3 bis 6 näher beschrieben.

Die Kupplungsvorrichtung 11 besitzt einen Stutzen 12, der beim Anschluss an einen Gargutbehälter 2 in dessen Inneres hineinragt. An den Stutzen 12 schließt ein Teil 13 an, welches als Anschlag für den Gargutbehälter 2 im aufgestecktem Zustand dient. Mit 14 ist ein Teil der Kupplungsvorrichtung 11 bezeichnet, in dem die Zuleitung 15 für die Dampfzuführung und eine Ableitung 16 für die Ableitung überschüssigen Dampfes aus dem Gargutbehälter 2 angeordnet sind. Über diese Ableitung 16 kann aber auch in umgekehrter Richtung Frischluft von Außen dem Gargutbehälter 2 zugeleitet werden.

Im Stutzen 12 der Kupplungsvorrichtung 11 sind seitlich Austrittsöffnungen 17 angeordnet, durch die der Dampf in den Gargutbehälter 2 einströmen kann. Die in der Zeichnung dargestellten Pfeile 18 und die gestrichelte Darstellung zeigen, wie der Dampf über das Kupplungsstück 11 und seinen Stutzen 12 in den Gargutbehälter 2 geleitet wird. Grundsätzlich ist es jedoch ausreichend, wenn die Austrittsöffnungen 17 senkrecht zu der Einschubrichtung des jeweiligen Gargutbehälters 2 angeordnet sind, damit der einströmende Dampf nicht direkt auf das darin befindliche Lebensmittel geleitet wird. Dies würde, wie bereits erläutert, zu einem unerwünschten Garergebnis führen.

Bei dem vorliegenden Ausführungsbeispiel wird der Druckunterschied zwischen der Zuleitung 15 und dem Inneren des Gargutbehälters 2 auf besonders einfache Weise durch die freien Strömungsquerschnitte der Austrittsöffnungen 17 realisiert. Die Austrittsöffnungen 17 weisen jeweils einen lichten Durchmesser auf, der geringer als der lichte Durchmesser der Zuleitungen 15 ist. Aufgrund dieser Strömungshindernisse wird der Druck bei dem Eintritt des Dampfes in den Gargutbehälter 2 in gewünschter Weise reduziert und dessen Geschwindigkeit entsprechend erhöht. Geeignete lichte Durchmesser sowie erforderliche Dampfmengen pro Zeiteinheit und damit die erforderliche Heizleistung des Dampferzeugungsvorrichtung 8 ergeben sich aus Laborversuchen.

Bei alternativen Ausführungsformen könnten ferner Austrittsöffnungen 17 vorgesehen sein, deren lichte Querschnitte mittels der Steuerungseinrichtung 9 und geeigneter Aktoren in Abhängigkeit des gewünschten Druckunterschieds veränderbar sind.

Um eine Kurzschlussströmung des Dampfes zwischen den Austrittsöffnungen 17 und den Auslassöffnungen 21 auf einfache Weise zu vermeiden, sind die Austrittsöffnungen 17 dabei, wie in dem vorliegenden Ausführungsbeispiel, seitlich oder auf der Oberseite des Stutzens 12 angeordnet, während die Auslassöffnungen 21 auf der Unterseite des Stutzens 12 angeordnet sind. Siehe hierzu die Figuren 3 bis 5.

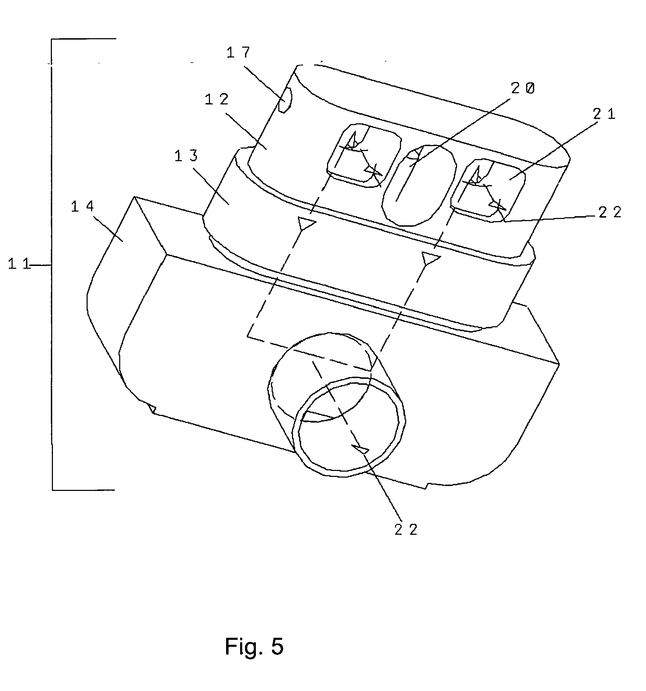

Aus der Figur 5 ist ersichtlich, wie das Innere des Gargutbehälters 2 mit der Außenluft in Verbindung steht. Auf der Unterseite des Stutzens 12 sind Auslassöffnungen 21 zu sehen, über die überschüssiger bzw. zu kalter Dampf aus dem Gargutbehälter 2 über die in der Kupplungsvorrichtung 11 gebildeten Kanäle in die Ableitung 16 gelangen kann. Die Pfeile 22 und die gestrichelt gezeichneten Verbindungslinien zeigen den Weg, den der Dampf aus dem Gargutbehälter 2 nehmen kann.

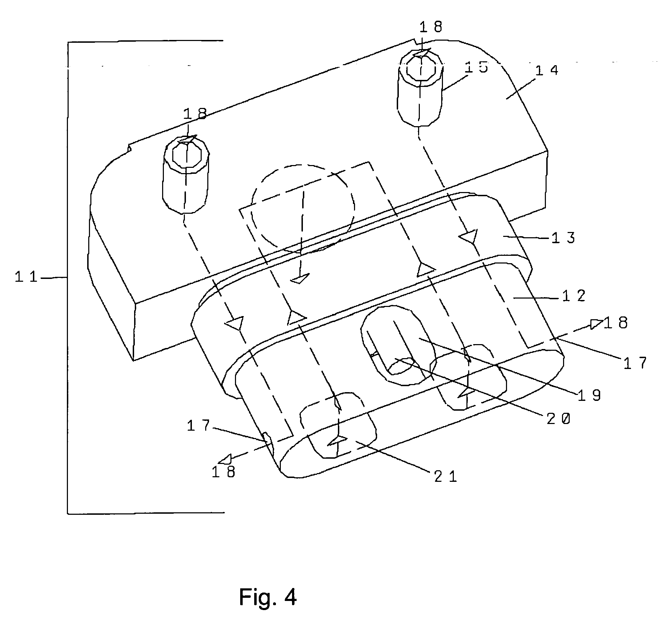

Ferner ist in dem Stutzen 12 der Kupplungsvorrichtung 11 ein Kanal 19 gebildet. Wie dies in der Figur 4 näher gezeigt ist, ragt in diesen Kanal 19 ein Temperaturfühler 20 hinein.

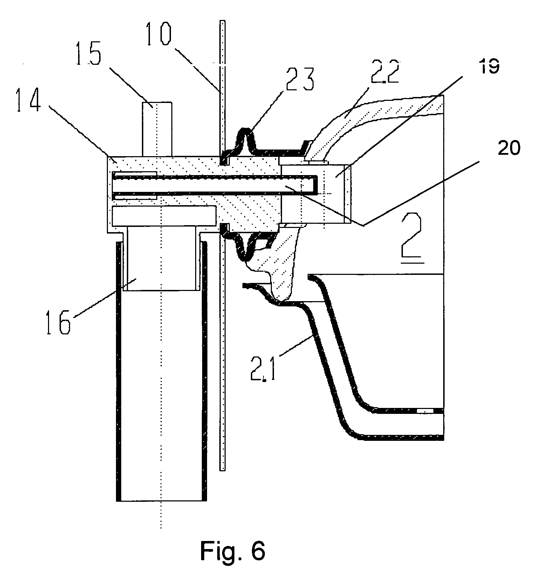

In der Figur 6 ist ausschnittsweise die Kupplungsvorrichtung 11 mit einem daran angeschlossenen Gargutbehälter 2 im Schnitt dargestellt.

Die in den vorherig genannten Figuren 3 bis 5 beschriebenen Mittel sind hier entsprechend nummeriert. Zusätzlich ist in Figur 6 zu erkennen, dass die Kupplungsvorrichtung 11 noch mit einer Dichtungsmanschette 23 versehen ist, mit der eine Abdichtung an der Außenfläche des Gargutbehälters 2 erfolgt, wenn dieser an die Kupplungsvorrichtung 11 angeschlossen ist.

Bei dem vorliegenden Ausführungsbeispiel ist der Stutzen 12 im Wesentlichen steif ausgebildet, so dass eine Ankupplung des Gargutbehälters 2 an die Kupplungsvorrichtung 11 allein durch das Einschieben bzw. Aufschieben des Gargutbehälters 2 auf die Andockstation 10 erfolgen kann. Der Benutzer muss keine weiteren Handgriffe tätigen, wie es beispielsweise bei einem als flexibler Schlauch ausgebildeten Stutzen erforderlich wäre.

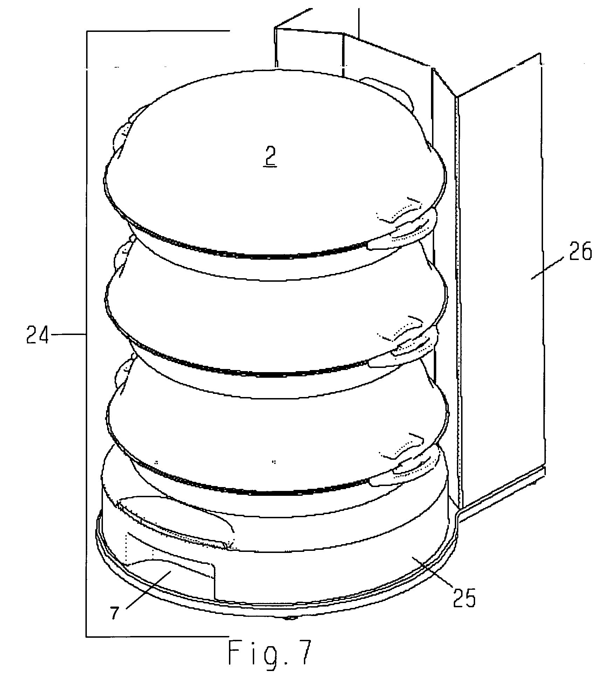

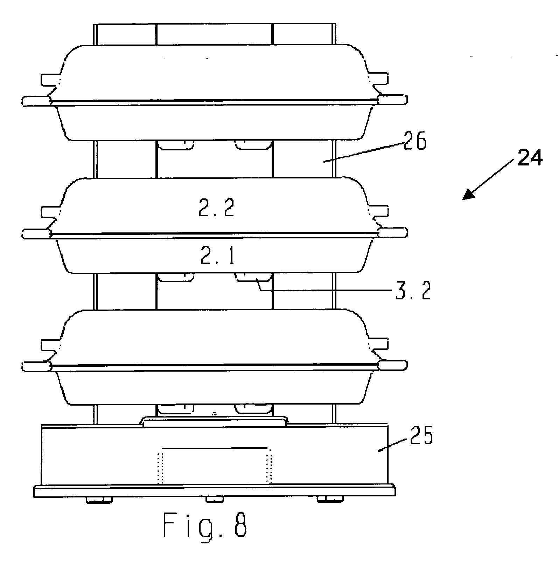

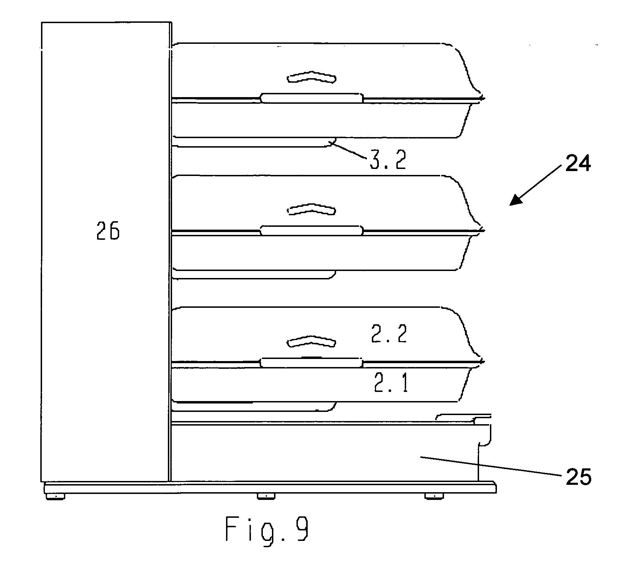

In den Figuren 7 bis 10 ist eine weitere Variante der erfindungsgemäßen Garvorrichtung dargestellt. Diese Garvorrichtung 24 besteht aus dem Bodenteil 25, der Andockstation 26 und den Gargutbehältern 2. Das Gerät 24 weist ebenfalls eine Bedien- und Anzeigevorrichtung 7 auf. Der Wasserbehälter, die Dampferzeugungsvorrichtung sowie die Steuerungseinrichtung können bei diesem Gerät 24 im Bodenteil 25 oder auch in der Andockstation 26 untergebracht sein.

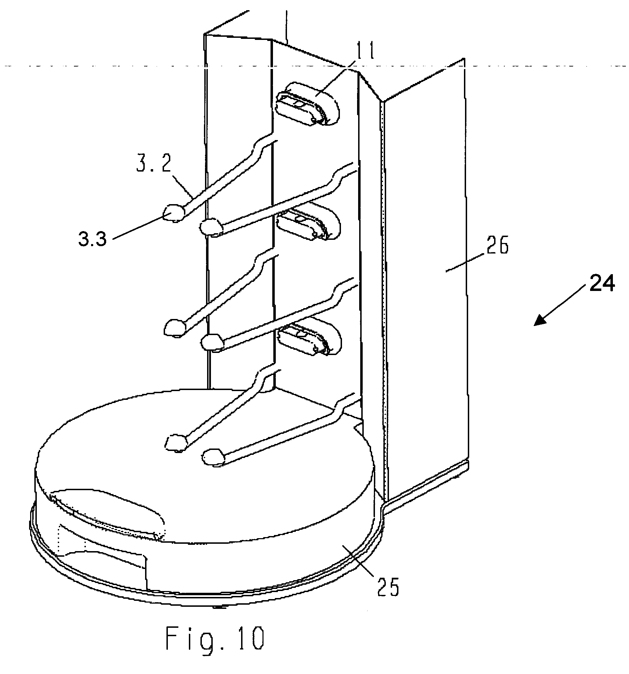

Wie in Figur 10 dargestellt, sind bei dieser Ausführung zur Aufnahme der Gargutbehälter 2 Tragarme 3.2 vorgesehen, die mit der zentralen Andockstation 26 verbunden sind.

In der Andockstation 26 sind alle dampf- bzw. luftführenden und wasserführenden sowie die elektrischen Leitungen untergebracht. Dies sind insbesondere die Dampfzuleitungen und die Ableitungen für den in die Gargutbehälter 2 einzuführenden Dampf bzw. aus diesem abzuleitenden Dampf. Ferner verlaufen hier auch die Leitungsverbindungen zwischen dem in der Kupplungsvorrichtung 11 integrierten Temperaturfühler und der Steuerungseinrichtung.

Die Bedienung dieses Gerätes 24 kann wiederum in gleicher Weise wie beim Ausführungsbeispiel gemäß Figur 1 bis 6 vorgenommen werden. Nach dem Befüllen der Gargutbehälter 2 mit der zu garenden Speise, wird der Gargutbehälter 2 mit seiner auf der rückwärtigen Seite angeordneten Öffnung direkt an die Kupplungsvorrichtung 11 der Andockstation 26 angekuppelt. Der Gargutbehälter 2 wird dabei von den Tragarmen 3.2 im Gerät 24 frei ausladend gehalten. Die vorne an den Tragarmen 3.2 gebildeten Klemmwinkel 3.3 verklinken sich mit dem Bodenteil 2.1 des Gargutbehälters 2 und sorgen somit für einen sicheren Sitz in der Andockstation 26.

Die erfindungsgemäße Kupplungsvorrichtung 11 kann in verschieden aufgebauten Dampfgarsystemen Anwendung finden, und zwar unabhängig von der gehäusemäßigen Bauart und der Anordnung der Wasserbehälter, der Dampferzeugungsvorrichtung sowie der Steuerungseinrichtung.

Dadurch werden in einfacher Weise auch Kombinationen mit anderen Beheizungsarten möglich. Sogar in einem Mikrowellengerät ist die Kupplungsvorrichtung 11 verwendbar, da diese in einfacher Weise mikrowellendicht ausgebildet werden kann

## Patentansprüche

1. Verfahren zum Dampfgaren, bei dem der in einer Dampferzeugungsvorrichtung (8) erzeugte Dampf über eine Zuleitung (15) in einen Gargutbehälter (2) geleitet wird und bei dem Einlass in den Gargutbehälter (2) tangential zu der Gargutbehälterwand einströmt, wobei die Dampferzeugung mittels einer Steuerungseinrichtung (9) derart gesteuert oder geregelt wird und eine Öffnung (17) in den Gargutbehälter (2) derart ausgebildet ist, dass der Unterschied zwischen dem Druck in der Zuleitung (15) und dem Druck im Inneren des Gargutbehälters (2) mindestens 1 kPa beträgt.

2. Verfahren nach Anspruch 1,
**dadurch gekennzeichnet,**
**dass** dem Dampf bei dem Einströmen in den Gargutbehälter (2) mittels eines Strömungsleitelements (11) eine Richtung vorgegeben wird, so dass dessen Strömungswegstrecke von der Öffnung (17) zu einer Auslassöffnung (21) des Gargutbehälters (2) maximal wird.

3. Verfahren nach Anspruch 2,
**dadurch gekennzeichnet,**
**dass** der Dampf bei dem Einströmen in den Gargutbehälter (2) mittels des Strömungsleitelements (11) weg von einem zumindest teilweise in dem Gargutbehälter (2) angeordneten Temperaturfühler (20) geleitet wird.

4. Verfahren nach mindestens einem der Ansprüche 1 bis 3,
**dadurch gekennzeichnet,**
**dass** die Dampferzeugung mittels der Steuerungseinrichtung (9) derart gesteuert oder geregelt wird, dass der Druck im Inneren des Gargutbehälters (2) während des Garprozesses etwa 0,3 kPa nicht übersteigt.

5. Vorrichtung zur Durchführung eines Verfahrens nach zumindest einem der Ansprüche 1 bis 4,
mit einem geschlossenen Behälter (2) für das Gargut, der ein Boden- (2.1) und ein Deckelteil (2.2) aufweist,
mit einer Vorrichtung (8) zum Erzeugen von Dampf,
mit einer Zuleitungsvorrichtung (10, 11, 15), mittels der der Dampf in den Gargutbehälter (2) leitbar ist, und
mit einer Trag- bzw. Befestigungsvorrichtung (3) für ein oder mehrere Gargutbehälter (2)
**dadurch gekennzeichnet,**
**dass** der Gargutbehälter (2) an eine Zuleitung (15) zum Einleiten des Dampfes und an einen Temperaturfühler (20) anschließbar ausgebildet ist, wobei der Temperaturfühler (20) mit einer Steuerungseinrichtung (9) in Verbindung steht, mittels der die Steuerung der Dampfzuleitung in den Gargutbehälter (2) zur Durchführung des Gar- bzw. Erwärmungsprozesses durchgeführt wird.

6. Vorrichtung nach Anspruch 5,
**dadurch gekennzeichnet,**
**dass** der Gargutbehälter (2) an eine Ableitung (16) für das Abführen von Luft bzw. überschüssigem Dampf aus dem Gargutbehälter (2) anschließbar ausgebildet ist.

7. Vorrichtung nach Anspruch 5 oder 6,
**dadurch gekennzeichnet,**
**dass** ein oder mehrere Kupplungsvorrichtungen (11) stationär in der Garvorrichtung (1, 24) angeordnet sind, dass in der Kupplungsvorrichtung (11) mindestens eine Zuleitung (15) für den Dampf integriert ist, dass der Gargutbehälter (2) mit einer Öffnung versehen ist, in die ein Stutzen (12) der Kupplungsvorrichtung (11) formschlüssig und dampfdicht eingreifen kann und dass beim Beschicken der Garvorrichtung (1, 24) die Gargutbehälter (2) direkt an die Kupplungsvorrichtung (11) ankoppelbar sind.

8. Vorrichtung nach Anspruch 7,
**dadurch gekennzeichnet,**
**dass** die Kupplungsvorrichtung (11) zwischen der Zuleitung (15) und dem Gargutbehälter (2) derart ausgebildet ist, dass der Dampf tangential zur Garraumwand in den Gargutbehälter (2) einströmt.

9. Vorrichtung nach Anspruch 7 oder 8,
**dadurch gekennzeichnet,**
**dass** in der Kupplungsvorrichtung (11) die Zuleitung (15) für den Dampf in den Gargutbehälter (2) und der Temperaturfühler (20) angeordnet sind.

10. Vorrichtung nach Anspruch 9,
**dadurch gekennzeichnet,**
**dass** in der Kupplungsvorrichtung (11) die Ableitung (16) für Luft bzw. Dampf aus dem Gargutbehälter (2) angeordnet ist.

11. Vorrichtung nach Anspruch 10,
**dadurch gekennzeichnet,**
**dass** der Temperaturfühler (20) in einen in der Kupplungsvorrichtung (11) gebildeten Kanal (19) hineinragt, und von der Garraumatmosphäre umströmt werden kann.

12. Vorrichtung nach einem der Ansprüche 9 bis 11,
**dadurch gekennzeichnet**
**dass** der Dampf über seitlich im Stutzen (12) der Kupplungsvorrichtung (11) angeordnete Öffnungen (17) in den Gargutbehälter (2) geleitet wird.

13. Vorrichtung nach einem der Ansprüche 9 bis 12,
**dadurch gekennzeichnet**
**dass** der aus dem Gargutbehälter (2) herauszuleitende Dampf über Auslassöffnungen (21) erfolgt, die unterhalb des Stutzens (12) der Kupplungsvorrichtung (11) angeordnet sind.

14. Vorrichtung in einer Ausbildung gemäß einem der Ansprüche 5 bis 13,
**dadurch gekennzeichnet,**
**dass** die Vorrichtung aus einem Sockelteil (4) und einem Kopfteil (6) besteht,
**dass** zwischen Sockelteil (4) und dem Kopfteil (6) eine Tragvorrichtung (3) zur Aufnahme der Garbehälter (2) vorgesehen ist und dass im hinteren Bereich der Vorrichtung eine Andockstation (10) zur Aufnahme der Luft- bzw. Dampfleitungen, der Wasserleitungen sowie zur Aufnahme der elektrischen Leitungen angeordnet ist, und dass in der Andockstation (10) mehrere Kupplungsvorrichtungen (11) angebracht sind.

15. Vorrichtung in einer Ausbildung gemäß einem der Ansprüche 5 bis 13,
**dadurch gekennzeichnet,**
**dass** die Vorrichtung ein Bodenteil (25) und eine davon senkrecht ausgehende Andockstation (26) und darin angeordnete Kupplungsvorrichtungen (11) aufweist, wobei die Tragvorrichtung (3) in der Andockstation (26) integriert ist.

16. Kupplungsvorrichtung (11) für eine Vorrichtung nach mindestens einem der Ansprüche 5 bis 15,
**dadurch gekennzeichnet,**
**dass** in der Kupplungsvorrichtung (11) mindestens eine Zuleitung (15) für den Dampf integriert ist und dass die Kupplungsvorrichtung (11) derart ausgebildet ist, dass ein Stutzen (12) der Kupplungsvorrichtung (11) formschlüssig und dampfdicht in eine Öffnung eines Gargutbehälters (2) eingreift, wenn der Gargutbehälter (2) an die Kupplungsvorrichtung (11) angekoppelt wird.

17. Kupplungsvorrichtung (11) nach Anspruch 16,
**dadurch gekennzeichnet,**
**dass** in der Kupplungsvorrichtung (11) ein Temperaturfühler (20) angeordnet ist.

18. Kupplungsvorrichtung (11) nach Anspruch 17,
**dadurch gekennzeichnet,**
**dass** in der Kupplungsvorrichtung (11) die Ableitung (16) für Luft bzw. Dampf aus dem Gargutbehälter (2) angeordnet ist.
